# EUROPÄISCHE PATENTSCHRIFT

(11) **EP 3 645 240 B1**
(45) Veröffentlichungstag und Bekanntmachung des Hinweises auf die Patenterteilung: **22.02.2023**
(21) Anmeldenummer: 18752677.7
(22) Anmeldetag: 28.06.2018
(51) Int. Cl.: B29C 51/26, B29C 51/42, B29C 51/22, B29C 51/44, B29C 71/00, B29K 67/00

(54) **VERFAHREN ZUM KRISTALLISIEREN EINER FOLIE, VERFAHREN UND VORRICHTUNG ZUM FORMEN EINER FOLIE SOWIE ANLAGE ZUM HERSTELLEN VON PRODUKTEN AUS THERMOPLASTISCHEM FOLIENMATERIAL**
METHOD FOR THE CRYSTALLISATION OF A FILM, METHOD AND DEVICE FOR SHAPING A FILM, AND SYSTEM FOR PRODUCING PRODUCTS FROM A THERMOPLASTIC FILM MATERIAL
PROCÉDÉ POUR LA CRISTALLISATION D'UN FILM, PROCÉDÉ ET DISPOSITIF POUR LA MISE EN FORME D'UN FILM AINSI QU'INSTALLATION POUR LA FABRICATION DE PRODUITS EN MATÉRIAU DE FILM THERMOPLASTIQUE

(30) Priorität: 30.06.2017 DE 102017006182
(43) Veröffentlichungstag der Anmeldung: 06.05.2020
(73) Patentinhaber: Kiefel GmbH, 83395 Freilassing (DE)
(72) Erfinder: WABNIG, Erwin, 83313 Siegsdorf (DE); WIESER, Gerhard, 83451 Piding (DE); SCHÜTZINGER, Stefan, 83224 Staudach-Egerndach (DE)
(74) Vertreter: DTS Patent- und Rechtsanwälte Schnekenbühl und Partner mbB
(86) Internationale Anmeldenummer: PCT/DE2018/000198
(87) Internationale Veröffentlichungsnummer: WO 2019/001603

(56) Entgegenhaltungen:
- DE-A1-102016 118 295
- US-A- 5 618 486
- US-A1- 2005 037 168
- DATABASE WPI Week 199218 Thomson Scientific, London, GB; AN 1992-145550 XP002785722, -& JP H04 85019 A (SEKISUI PLASTICS CO LTD) 18. März 1992 (1992-03-18)

## Beschreibung

Die Erfindung betrifft ein Verfahren zum Kristallisieren einer Folie aus einem thermoplastischen Folienmaterial, insbesondere aus einem C-PET-Material, zu einem Produkt, bei welchem ein Kristallisationsvorgang durch Umformen des thermoplastischen Folienmaterials innerhalb eines Formwerkzeugs eingeleitet wird.

Die Erfindung betrifft ferner ein Verfahren zum Formen, insbesondere zum Thermoformen, einer Folie aus einem thermoplastischen Folienmaterial, insbesondere aus einem C-PET-Material, zu einem Produkt, bei welchem die Folie mittels eines Formwerkzeugs zu dem Produkt umgeformt wird, bevor das Produkt aus der Folie heraus vereinzelt wird.

Die Erfindung betrifft auch eine Vorrichtung zum Formen, insbesondere zum Thermoformen, einer Folie aus einem thermoplastischen Folienmaterial, insbesondere aus einem C-PET-Material zu einem Produkt, mit einem Umformwerkzeug umfassend eine Gesamtbearbeitungsfläche, welche in einen einlaufenden Formbereich und in einen auslaufenden Formbereich unterteilt ist, und mit einer Bearbeitungsstrecke, entlang welcher die Folie in Maschinenrichtung durch das Umformwerkzeug bewegt wird.

Die Erfindung betrifft darüber hinaus eine Vorrichtung zum Formen, insbesondere zum Thermoformen, einer Folie aus einem thermoplastischen Folienmaterial, insbesondere aus einem C-PET-Material, zu einem Produkt, mit einem Umformwerkzeug umfassend eine Gesamtbearbeitungsfläche, welche in einen einlaufenden Formbereich und in einen auslaufenden Formbereich unterteilt ist.

Die Erfindung betrifft des Weiteren eine Anlage zum Herstellen von Produkten aus thermoplastischem Folienmaterial, insbesondere aus C-PET-Material, mit einer Formstation zum Formen des thermoplastischen Folienmaterials zu Produkten, insbesondere mit einer Vereinzelungsstation zum Vereinzeln der Produkte aus dem thermoplastischen Folienmaterial, und mit einer Bearbeitungsstrecke, entlang welcher das thermoplastische Folienmaterial in Maschinenrichtung durch die Anlage bewegt wird.

Die Erfindung betrifft außerdem eine Form-Füll-Verschließanlage zum Herstellen von Produkten aus thermoplastischem Folienmaterial, insbesondere aus C-PET-Material, mit einer Formstation zum Formen des thermoplastischen Folienmaterials zu Produkten, insbesondere mit einer Vereinzelungsstation zum Vereinzeln der Produkte aus dem thermoplastischen Folienmaterial, und mit einer Bearbeitungsstrecke, entlang welcher das thermoplastische Folienmaterial in Maschinenrichtung durch die Anlage bewegt wird.

Die Erfindung betrifft außerdem eine Drehtisch-Anlage zum Herstellen von Produkten aus thermoplastischem Folienmaterial, insbesondere aus C-PET-Material, mit einer Formstation zum Formen des thermoplastischen Folienmaterials zu Produkten, insbesondere mit einer Vereinzelungsstation zum Vereinzeln der Produkte aus dem thermoplastischen Folienmaterial, und mit einer Bearbeitungsstrecke, entlang welcher das thermoplastische Folienmaterial in Maschinenrichtung durch die Anlage bewegt wird

Insbesondere gattungsgemäße Verfahren und Vorrichtungen, mit welchen thermoplastisches Folienmaterial zu Produkten umgeformt werden, sind aus dem Stand der Technik bereits bekannt. Bei einer herkömmlichen Verarbeitung solcher thermoplastischen Folienmaterialien, wie etwa kristallines Polyethylenterephthalat (C-PET), insbesondere geschäumtes C-PET, Polylactide (PLA) sowie sonstige Biopolymere oder dergleichen, erfolgen sowohl ein Umformprozess des thermoplastischen Folienmaterialiens als auch ein Kristallisationsprozess dieses thermoplastischen Folienmaterialiens in einem Bearbeitungswerkzeug, welches hierzu in eine einlaufende Werkzeughälfte und in einer auslaufende Werkzeughälfte unterteilt ist. Mittels der einlaufenden Werkzeughälfte wird das thermoplastische Material zu Produkten umgeformt, wobei hierdurch der Kristallisationsprozess eingeleitet wird. Anschließend wird das zu den Produkten umgeformte thermoplastische Material in Richtung auslaufende Werkzeughälfte weiterbewegt, um anschließend den zuvor eingeleiteten Kristallisationsprozess mittels der auslaufenden Werkzeughälfte zu beenden, wobei hierzu das umgeformte thermoplastische Material mittels der auslaufenden Werkzeughälfte gekühlt wird.

Nach Durchlaufen dieses Kristallisationsprozesses bleiben die aus dem thermoplastischen Material erzeugten Produkte formstabil und können später durch Hitzeeinwirkung bei ordnungsgemäßer Verwendung in zugelassenen Temperaturbereichen nicht kritisch oder nur vernachlässigbar gering verformt werden.

So beschreibt die US 5 618 486 A ein Verfahren zur Herstellung eines hitzebeständigen Formschaumproduktes umfassend: (a) Vorwärmen einer geschäumten Polyesterharzfolie mit niedriger Kristallinität; (b) Formen der Folie zu einem geformten Produkt, (i) Erwärmen nur des Teils der vorgewärmten Folie, der in ein Endprodukt umwandelbar ist; wobei diese Erwärmung für eine solche Zeitdauer durchgeführt wird, daß der erwärmte Teil der Folie eine durchschnittliche Kristallinität von mehr als etwa 20% erreicht, und (ii) Abkühlen des nicht erwärmten Teils der vorgewärmten Folie; und (c) Abkühlen des resultierenden geformten Produkts, wodurch eine Verformung des geformten Produkts beim Erwärmen begrenzt und die Formzeit verkürzt wird.

Die JP H0 485019 A beschreibt die Steigerung der Produktivität einer Thermoformanlage durch Bereitstellung von zwei oder mehr Heizformen für die Kristallisation einer Folie und deren Thermoformung. Zusammensetzung: Die Vorwärmung erfolgt in einer Vorwärm-Erweichungszone, indem zwei Sätze von Vorwärmplatten von 140 Grad Celsius in Reihe angeordnet werden, wobei eine kristalline Polyethylenterephthalat-Folie eingeklemmt und in Kontakt gebracht wird. Das Thermoformen und Kristallisieren wird in einer Thermoform-Kristallisationszone durchgeführt, indem zwei Sätze von Heizformen von 180 Grad C in Reihe angeordnet werden und die kristalline Polyethylenterephthalat-Folie thermogeformt und kristallisiert wird. Das Abkühlen der Platte nach dem Formen und Kristallisieren erfolgt in einer Kühlzone durch Kühlformen.

Die US 2005/037168 A1 beschreibt ein kontinuierliches Verfahren zur Herstellung eines thermoplastischen Gegenstandes, umfassend das Extrudieren einer Folie aus Thermoplast und das Kontaktieren der Folie mit einer Formoberfläche, während sich die Folie in einem im wesentlichen nicht orientierten Zustand befindet. Die Formoberfläche wird während des Thermoformens selektiv erwärmt und/oder gekühlt, um die Folie in einem geschmolzenen oder thermoformbaren Zustand zu halten. Eine an die Formoberfläche angrenzende Abstreiferplatte wird auf unterschiedlicher Temperatur gehalten, um einen vorbestimmten Kristallinitätsgrad der Folie zu induzieren, um die Steifigkeit der Bahn zu erhöhen und die Ausrichtung der Bahn zu verbessern und um optional die Trennung der Artikel von der Form zu unterstützen. Eine kontinuierliche Vorrichtung zur Herstellung von thermogeformten Artikeln hat Co-Extruder zum Extrudieren von mindestens zwei verschiedenen Schichten, die unterschiedliche Eigenschaften (z.B. polar und unpolar) haben können, und eine temperaturgesteuerte Formoberfläche. Bevorzugte thermoplastische Zusammensetzungen der vorliegenden Erfindung haben eine verbesserte Zähigkeit und eine beibehaltene Grenzviskosität.

Ferner beschreibt die DE 10 2016 118295 A1 Die Erfindung betrifft ein Verfahren zum Betrieb einer Tiefziehverpackungsmaschine, wobei eine Polyesterfolie mit einer Dicke von wenigstens 250 µm in einer Vorheizstation auf eine Temperatur von wenigstens 100 °C erwärmt wird, bevor die Polyesterfolie in einer Formstation in einem beheizten Formwerkzeugunterteil zu Mulden tiefgezogen wird, um eine teilweise Umwandlung der Polyesterfolie von amorph in kristallin zu bewirken, bevor die tiefgezogene Polyesterfolie in einer Kühlstation ausgehärtet wird, die tiefgezogenen Mulden mit Produkt gefüllt und mit einer Deckelfolie Luftdicht zu formstabilen und ofenfähigen Verpackungen gesiegelt werden. Insbesondere C-PET-Materialien sind nach der Beendigung eines Kristallisationsprozesses sehr formstabil, sofern sie ordnungsgemäß verwendet werden. Insofern eignen sich insbesondere aus C-PET-Materialien hergestellte Produkte etwa als Mikrowellengeschirr oder als Aufbewahrungsverpackungen für Fertigprodukte, oder dergleichen.

Nachteilig bei der herkömmlichen Verarbeitung solcher thermoplastischen Materialien ist speziell, dass ein thermoplastisches Material zeitlich lange in der auslaufenden Werkzeughälfte verbleiben muss, bis es ausreichend kristallisiert und entsprechend formstabil ist, um später im Gebrauch selbst bei höheren Temperatureinsätzen wie vorgesehen zu funktionieren.

Der Erfindung liegt die Aufgabe zugrunde, gattungsgemäße Formverfahren und hierzu eingesetzte Vorrichtungen und Anlagen weiterzuentwickeln, um auch insbesondere die genannten Nachteile zu überwinden.

Die Verfahren lassen sich hierbei besonders vorteilhaft mit den vorgeschlagenen Vorrichtungen bzw. der vorgeschlagenen Anlage durchführen.

Die Aufgabe der Erfindung wird insbesondere durch die Merkmale der unabhängigen Ansprüche gelöst. Die Merkmale der abhängigen Ansprüche stellen hierbei vorteilhafte Weiterentwicklungen dar.

Insofern löst die vorliegende Aufgabe nach einem ersten Aspekt der Erfindung ein Verfahren zum Kristallisieren einer Folie aus einem thermoplastischen Folienmaterial, insbesondere aus einem C-PET-Material, zu einem Produkt, bei welchem ein Kristallisationsvorgang durch Umformen des thermoplastischen Folienmaterials innerhalb eines Formwerkzeugs eingeleitet wird, wobei ein Großteil des Kristallisationsvorgangs entlang einer Kristallisationsstrecke außerhalb dieses Formwerkzeugs durchgeführt wird.

Findet ein Großteil der Kristallisation außerhalb des Formwerkzeugs statt, vorzugsweise an einer entsprechend ausgestalteten Kristallisationsstrecke, kann das Formwerkzeug signifikant effektiver für seine primäre Verwendung eingesetzt werden, nämlich der Formgebung der Folie. Hierdurch können etwa schnellere Taktzeiten erzielt werden.

Außerdem kann auf einen Kristallisationsvorgang wesentlich zielgerichteter Einfluss genommen werden, wenn dieser größtenteils außerhalb des Formwerkzeugs abläuft.

Eine derartig neu geschaffene Kristallisationsstrecke kann unterschiedlichst realisiert sein. Beispielsweise kann die Kristallisationsstrecke geradlinig ausgebildet sein. Kumulativ oder alternativ kann die Kristallisationsstrecke aber auch kurvig, insbesondere mehrfach kurvig, mit wenigstens einem Bogenstreckenabschnitt, oder alternativ sogar kreisförmig mit einer um eine Rotationsachse verlaufenden kreisförmigen Kristallisationsstrecke ausgestaltet sein.

Die Länge der Kristallisationsstrecke kann beispielsweise in Abhängigkeit von einer Transportgeschwindigkeit der Folie bzw. von hieraus geformten Formlingen ausgewählt werden.

Kumulativ oder alternativ kann die Länge der Kristallisationsstrecke in Abhängigkeit von einem Kristallisationsvermögen bzw. einer Kristallisationsgeschwindigkeit eines Folienmaterials gewählt werden.

Ferner kann die Länge der Kristallisationsstrecke auch noch in Abhängigkeit von Temperaturen an der Kristallisationsstrecke gewählt werden.

Der Begriff "Formling" beschreibt im Sinne der Erfindung eine bereits mittels eines Formwerkzeugs umgeformte Folie, wobei das thermoplastische Material der Folie noch kristallisieren muss, bevor letztendlich ein fertiges Produkt vorliegt. Bevorzugt wird ein solcher Formling während bzw. nach der Kristallisation in einem weiteren Formwerkzeug nach- bzw. endgeformt.

Eine ausreichend lang ausgebildete Kristallisationsstrecke kann bereits bereitgestellt werden, wenn die Kristallisationsstrecke eine Länge von 1 m aufweist. Vorzugsweise besitzt die Kristallisationsstrecke eine Länge von mehr als 1 m, vorzugsweise von mehr als 2 m. Je nach Einsatzgebiet kann die vorliegende Kristallisationsstrecke auch bis zu 5 m betragen.

An einer im Sinne der vorliegenden Erfindung eingerichteten Kristallisationsstrecke können unterschiedliche Bearbeitungsvorrichtungen angeordnet sein.

Insbesondere kann die Kristallisationsstrecke Bearbeitungsstationen einer Form-Füll-Schließanlage umfassen. Mit anderen Worten gesagt kann die vorliegende Kristallisationsstrecke zwischen Bearbeitungsstationen einer Form-Füll-Schließanlage angeordnet sein.

Darüber hinaus können der einlaufende und der auslaufende Formbereich vorteilhafterweise enger aneinander angrenzend angeordnet werden, wodurch eine nicht zu vernachlässigende Einsparung an Folienmaterial möglich ist, da insbesondere die mit der Folie ausgebildeten Nutzen enger nebeneinander angeordnet werden können bzw. aneinander liegen können.

Ein weiterer Vorteil der vorliegenden Erfindung ist eine bereichsweise Kühlung innerhalb eines primären Formwerkzeugs, insbesondere eines primären Umformwerkzeugs, nicht weiter zwingend erforderlich, wodurch nicht nur dieses primäre Formwerkzeug, sondern insbesondere auch eine entsprechende Formstation zum Behandeln eines thermoplastischen Materials, im Sinne vorliegender Erfindung signifikant einfacher konstruiert werden kann.

Mit anderen Worten, es kann darauf verzichten werden, einen Teilbereich des Formwerkzeugs zu beheizen und einen direkt daneben liegenden weiteren Teilbereich des Formwerkzeugs zu kühlen, wie dies bisher immer zwingend notwendig ist, um das umgeformte Folienmaterial durch einen Kristallisationsvorgang in seiner umgeformten Gestalt zu stabilisieren, bevor es aus dem Formwerkzeug gelangt und für eine weitere Verwendung bereitgestellt wird.

Im Speziellen kann an einem Formwerkezug unter anderem auf eine Isolierung zwischen einer einlaufenden und einer auslaufenden Werkzeughälfte verzichtet werden, da vorliegend der gesamte Bearbeitungsbereich (Formfläche) eines Formwerkzeugs, also sowohl der einlaufende Formbereich als auch der auslaufende Formbereich erwärmt und damit zur Umformung von thermoplastischem Material verwendet werden kann, also im Sinne eines Primärwerkzeugs.

Der Begriff "Primär-Formwerkzeug" beschreibt im Zusammenhang mit vorliegender Erfindung insofern ein erstes Formwerkzeug, an welchem bereits durch Umformen einer Folie aus einem thermoplastischen Folienmaterial ein Kristallisationsvorgang eingeleitet werden kann. An diesem Primär-Formwerkzeug wird der Kristallisationsvorgang jedoch nicht weitergeführt bzw. schon gar nicht abgeschlossen. Vielmehr verlässt der aus der Folie geformte Formling dieses Primär-Formwerkzeug bereits nach dem Start des Kristallisationsvorgangs, so dass mindestens mehr als 90 % des Kristallisationsvorgangs außerhalb des Primär-Formwerkzeugs erfolgt.

Insofern verkörpert das einleitende Formwerkzeug bzw. das Primär-Formwerkzeug auch das erste Formwerkzeug, in welchem ein Formling bzw. ein Produkt zu mehr als 80 % oder 90 % aus einer bevorzugt planen Folie umgeformt wird.

Der Begriff "Hauptkristallisation eines Kristallisationsvorgangs" beschreibt im Sinne der Erfindung einen Großteil einer Kristallisation, welche ein thermoplastisches Material, insbesondere ein C-PET-Material, von einer ersten Umformung der diesbezüglichen Folie bis zu einem fertigen Produkt durchläuft. Beispielsweise beträgt die Hauptkristallisation 50 % oder mehr des gesamten Kristallisationsprozesses.

Dieses erste oder einleitende Formwerkzeug bzw. Primär-Formwerkzeug ist somit auch vor der eigentlichen Kristallisationsstrecke angeordnet.

Vorzugsweise ist das Primär-Formwerkzeug einer Primär-Formstation zugehörig, welche somit vor der Kristallisationsstrecke angeordnet ist. Insofern ist das weitere Formwerkzeug einer Sekundär-Formstation zugeordnet, welche bevorzugt hinter der Kristallisationsstrecke platziert ist, ggf. innerhalb dieser Kristallisationsstrecke.

Vorliegend können das Primär-Formwerkzeug bzw. die Primär-Formstation und das Sekundär-Formwerkzeug bzw. die Sekundär-Formstation konstruktiv im Wesentlichen gleich gebaut bzw. aufgebaut sein, bis insbesondere auf den Hauptunterschied, dass das Primär-Formwerkzeug bzw. dessen Bearbeitungsbereich zumindest teilweise, bevorzugt vollständig, beheizbar ist und dass das Sekundär-Formwerkzeug bzw. dessen Bearbeitungsbereich zumindest teilweise, bevorzugt vollständig, gekühlt werden kann.

Eine vorteilhafte Verfahrensvariante sieht vor, dass der Kristallisationsvorgang in einem weiteren Formwerkzeug, einem Sekundär-Formwerkzeug, beendet wird, wobei das weitere Formwerkzeug von einem einleitenden Formwerkzeug, einem Primär-Formwerkzeug, verschieden ist, mittels welcher der Kristallisationsvorgang zuvor eingeleitet wurde. Hierdurch steht das Primär-Formwerkzeug wesentlich schneller für einen weiteren Umformvorgang wieder bereit.

An dieser Stelle sei nochmals deutlicher erwähnt, dass vorliegend erkannt wurde, dass die Phase der Hauptkristallisation von thermoplastischem Material die zeitliche kritische Komponente bildet, welche die Verarbeitung von thermoplastischem Materialien einbremst.

Insofern wurde die Funktion der Hauptkristallisation im Sinne der Erfindung aus dem einleitenden Formwerkzeug herausgenommen bzw. hinausverlagert und vorteilhafterweise hauptsächlich in eine dem Formwerkzeug nachgeschaltete Kristallisationsstrecke hinein verlagert.

Somit findet diese Hauptkristallisation des thermoplastischen Materials isoliert von dem Formwerkzeug, insbesondere isoliert von dem ersten Formwerkzeug statt, wodurch die Komponente bzw. Verfahrenskomponente der zuvor zwingend erforderlichen Formwerkzeug-Kristallisation vorliegend entfällt bzw. signifikant reduziert ist.

Hierdurch kann die Arbeitszeit, in welcher das Formwerkzeug geschlossen ist, ebenfalls signifikant reduziert bzw. der Arbeitstakt erheblich erhöht werden.

Des Weiteren ist es vorteilhaft, wenn die Hauptkristallisation entlang einer Kristallisationsstrecke außerhalb der beiden Formwerkzeuge durchgeführt wird, während das thermoplastische Folienmaterial zwischen diesen beiden Formwerkzeugen transportiert wird.

Mittels der hier vorgesehenen Kristallisationsstrecke gelingt es, dass eine sich mit der Zeit fortschreitende Kristallisierung des umgeformten thermoplastischen Folienmaterials außerhalb des eigentlichen Formwerkzeugs erfolgen kann.

Insofern ist der Hauptkristallisierungsvorgang von dem Arbeitstakt des Formwerkzeugs entkoppelt, da dieser Hauptkristallisierungsvorgang in die Kristallisationsstrecke verlagert ist.

Insofern erfolgt ein Großteil der Kristallisation während einer bevorzugt linearen, wenn auch getakteten Bewegung des thermoplastischen Folienmaterials in Maschinenrichtung und nicht wie bisher üblich ausschließlich während eines ruhenden Arbeitstaktes des Formwerkzeugs, also bei einem Stillstand bzw. Pause einer Bewegung des thermoplastischen Folienmaterials in Maschinenrichtung.

Vorzugsweise ist die vorliegende Kristallisationsstrecke ein Teilabschnitt einer Bearbeitungsstrecke, entlang welcher die Folie in Maschinerichtung fortschreitend behandelt wird.

Hierbei kann die Bearbeitungsstrecke gerade ausgestaltet sein. Aber die Bearbeitungstrecke kann auch gebogen bzw. gekrümmt um einen Mittelpunkt, insbesondere um eine Rotationsachse, herum verlaufen.

Dementsprechend kann auch die Kristallisationstrecke zur Gänze oder zumindest teilweise gebogen bzw. gebogen sein. Hierdurch kann der Platzbedarf im Hinblick auf die Gesamtlänge einer Vorrichtung bzw. Anlage vorteilhaft reduziert werden.

Zwar ist vorliegend ein weiteres Formwerkzeug (Sekundär-Formwerkzeug) bzw. eine weitere Formstation (Sekundär-Formstation) erforderlich, wodurch sich diesbezüglich der maschinentechnische Aufwand erhöht. Jedoch können mit der vorliegenden Erfindung schnellere Taktzeiten hinsichtlich der Formwerkzeuge gefahren werden, da nicht mehr gewartet werden muss, bis das umgeformte Folienmaterial in einem auslaufenden Formbereich eines Formwerkzeugs hinreichend kristallisiert ist, damit eine ausreichende Formstabilität bzw. Konturtreue der erzeugten Produkte gewährleistet ist.

Ferner steht die gesamte Formfläche eines Formwerkzeugs (Primär-Formwerkzeug) für die eigentliche Umformung des thermoplastischen Folienmaterials zu Produkten zur Verfügung, wodurch die Anzahl der geformten Produkte pro Arbeitstakt des Formwerkzeugs erhöht bzw. verdoppelt werden kann.

Üblicherweise besitzt ein Formwerkzeug eine Gesamtbearbeitungsfläche von 800 mm (Breite quer zur Maschinenrichtung) x 600 mm (Länge in Maschinenrichtung), wobei für den einlaufenden Formbereich jedoch nur ca. 300 mm beheizbare Nutzfläche (Umformbereich) und für den auslaufenden Formbereich ebenfalls nur ca. 300 mm kühlbare Nutzfläche (Kristallisationsbereich) zur Verfügung steht, insbesondere pro Arbeitstakt des Formwerkzeugs.

Insofern ergab sich bisher auch nur eine Maximalgröße eines Nutzens von 800 mm x 300 mm an der Folie, welche in Maschinenrichtung taktweise bewegt wurden.

Dadurch, dass vorliegend nun aber die kühlbare Nutzfläche auch als beheizbare Nutzfläche genutzt werden kann, kann einerseits die Gesamtbearbeitungsfläche von 800 mm x 600 mm des Formwerkzeugs zum Umformen der thermoplastischen Folie genutzt werden. Andererseits ergibt sich hieraus auch eine Vergrößerung der einsetzbaren Nutzen auf 800 mm x 600 mm.

Beispielsweise konnten bei der herkömmlichen Verarbeitung bisher 7 bis 8 Arbeitstakt pro Minute bei halber Gesamtbearbeitungsfläche erzielt werden, wobei mit vorliegender Erfindung 15 bis 20 Arbeitstakt pro Minute bei voller Gesamtbearbeitungsfläche erreichbar sind. Beispielsweise kann vorliegend eine erhöhte Ausstoßleistung von bis zu 20 Takte/min oder mehr erzielt werden, insbesondere bei einer Wärmebeständigkeit von bis zu 200° C.

Insgesamt ist mit der vorliegenden Erfindung eine gute Steigerung der Produktivität (erhöhter Ausstoß an Produkten) einer Anlage zum Herstellen zum Herstellen von Produkten aus thermoplastischem Folienmaterial, insbesondere aus C-PET-Material, gegeben.

Mittels des Primär-Formwerkzeugs wird eine im Wesentlichen flache, also ebene, thermoplastische Folie in ein dreidimensionales Produkt umgeformt. Hierbei wird der eigentliche Kristallisierungsprozess des thermoplastischen Folienmaterials angestoßen.

Mittels des Sekundär-Formwerkzeugs wird keine Umformung mehr von einer eher flachen Gestalt in eine dreidimensionale Gestalt vorgenommen, wie noch mit dem Primär-Formwerkzeug. Vielmehr wird das zwischenzeitlich außerhalb des Primär-Formwerkzeugs kristallisierte thermoplastische Folienmaterial hinsichtlich seiner umgeformten Kontur nochmals stabilisiert, und es wird der Kristallisierungsprozess bevorzugt durch gezielte Kühlung beendet, so dass die umgeformte thermoplastische Folie das Sekundär-Formwerkzeug formstabil verlässt.

Mit der vorliegenden Erfindung lassen sich im Allgemeinen hervorragend nahezu jegliche Folien aus einem thermoplastischen Material mit einer teilkristallinen Struktur behandeln bzw. verarbeiten. Insbesondere auch eine Rigid-Folie.

Im Speziellen auch C-PET-Materialien, wobei der Begriff "C-PET" ein kristallines Polyethylenterephthalat beschreibt.

Neben den bereits genannten C-PET-Materialien, wie insbesondere auch geschäumtes C-PET-Material, können mit dem vorliegenden Verfahren insbesondere auch Polylactide (PLA) oder sonstige Biopolymere oder dergleichen ausgezeichnet verarbeitet werden.

Die Aufgabe der Erfindung wird nach einem weiteren Aspekt der Erfindung von einem Verfahren zum Formen, insbesondere zum Thermoformen, einer Folie aus einem thermoplastischen Folienmaterial, insbesondere aus einem C-PET-Material, zu einem Produkt, gelöst, bei welchem die Folie mittels eines Formwerkzeugs zu dem Produkt umgeformt wird, bevor das Produkt aus der Folie heraus vereinzelt wird, wobei sich das Verfahren dadurch auszeichnet, dass die umgeformte Folie außerhalb des Formwerkzeugs in Maschinenrichtung entlang einer Kristallisationsstrecke bewegt wird, um das Folienmaterial entlang der Kristallisationsstrecke zumindest teilweise zu kristallisieren.

Hierbei wird ein Teil des Kristallisationsvorgangs außerhalb des Formwerkzeugs bzw. des Primär-Formwerkzeugs durchgeführt werden, kann die Herstellung eines Produkts aus einem thermoplastischen Folienmaterial signifikant effektiver realisiert werden, wodurch auch die zuvor erwähnten Vorteile erzielbar sind.

Hierbei formuliert der Ausdruck "Maschinenrichtung" die Transportrichtung, in welcher die Folie und Formlinge bzw. Produkte entlang einer Fertigungslinie befördert werden.

Erfindungsgemäß ist vorgesehen,, dass die umgeformte Folie nach einem mittels des Formwerkzeugs erfolgten Umformen an die Kristallisationsstrecke übergeben wird, entlang welcher das thermoplastische Material der umgeformten Folie weiter kristallisiert, bevor die umgeformte Folie zur Weiterverarbeitung bereitgestellt wird. Hierdurch gelingt es, dass das thermoplastische Material der umgeformten Folie beispielsweise unabhängig von einer Schließzeit des Primär-Formwerkzeugs außerhalb des Primär-Formwerkzeugs kristallisieren kann, so dass mittels des Primär-Formwerkzeugs zwischenzeitlich weitere Umformungen erfolgen können. Ferner wird die umgeformte Folie nach einem Kristallisieren entlang der Kristallisationsstrecke an ein weiteres Formwerkzeug übergeben.

Hierbei kann mittels des weiteren Formwerkzeugs der Kristallisationsgrad des Folienmaterial gesteuert werden. Durch die Übergabe der umgeformten Folie nach einem Kristallisieren an der Kristallisationsstrecke an ein Sekundärwerkzeug, kann dort der bereits eingeleitete bzw. fortgeschrittene Kristallisationsvorgang insbesondere durch thermische Manipulation zusätzlich beeinflusst werden, oder auch abgeschlossen werden, wenn dies zweckmäßig erscheint.

Wird die umgeformte Folie nach einem Kristallisieren entlang der Kristallisationsstrecke an ein weiteres Formwerkzeug übergeben, um die umgeformte Folie mittels des weiteren Formwerkzeugs nachzuformen, kann dem Produkt eine besonders präzise Form verliehen werden. Gedacht sei hierbei zum Beispiel an spezielle Funktionsbereiche an einem Produkt, bei welchen es von Vorteil ist, wenn solche Funktionsbereiche qualitativ noch höherwertig erzeugt sind.

Außerdem ist es zweckmäßig, wenn die umgeformte Folie nach einem Kristallisieren entlang der Kristallisationsstrecke an ein weiteres Formwerkzeug übergeben wird, um die umgeformte Folie mittels des weiteren Formwerkzeugs zu kühlen, insbesondere bevorzugt aktiv zu kühlen. Insbesondere durch ein gezieltes Kühlen des thermoplastischen Materials an dem weiteren Formwerkzeug bzw. dem Sekundär-Formwerkzeug kann ein Kristallisationsvorgang abgeschlossen werden.

Hinsichtlich einer weiterführenden Verfahrensvariante ist es vorteilhaft, wenn die Folie in dem Formwerkzeug stromauf der Kristallisationsstrecke ausschließlich beheizt wird und/oder in einem weiteren Formwerkzeug stromab der Kristallisationsstrecke gekühlt wird. Hierdurch können die einzelnen Formwerkzeuge einfacher aufgebaut werden, da in einem einzelnen Formwerkzeug Heiz- und Kühleinrichtungen nicht gemeinsam vorgesehen werden müssen.

Mit anderen Worten bedeutet dies, dass zweckmäßigerweise das thermoplastische Folienmaterial an dem Primär-Formwerkzeug nur beheizt wird, während das thermoplastische Folienmaterial an dem Sekundär-Formwerkzeug gekühlt wird.

Der Begriff "stromauf" beschreibt hierbei eine Position, welche sich in Maschinenrichtung gesehen vor bzw. am Anfang einer Kristallisationsstrecke befindet. Dementsprechend beschreibt der Begriff "stromab" eine andere Position, welche in Maschinenrichtung gesehen hinter bzw. am Ende der Kristallisationsstrecke verortet ist.

Hinsichtlich einer spezifischeren Ausgestaltung der vorliegenden Erfindung ist es von Vorteil, wenn ein Einleiten eines Kristallisationsprozesses an einem thermoplastischen Material an einem ersten Formwerkzeug erfolgt und ein Beenden des zuvor eingeleiteten Kristallisationsprozesses an einem von dem ersten Formwerkzeug getrennten, weiteren Formwerkzeug erfolgt, wobei zwischen dem ersten Formwerkzeug und dem weiteren Formwerkzeug eine Kristallisationsstrecke angeordnet ist, an welcher das thermoplastischen Material während des Aufbaus einer Kristallisationsstruktur linear bewegt wird, insbesondere im Arbeitstakt der Formwerkzeuge bewegt wird.

Wird ein Kristallisationsprozess des thermoplastischen Folienmaterials mittels des in Maschinenrichtung stromauf der Kristallisationsstrecke angeordneten Formwerkzeugs ausschließlich gestartet, kann das Formwerkzeug bzw. das Primär-Formwerkzeug zuvörderst zum Umformen einer im Wesentlichen planen Folie eingesetzt werden, wobei der aus der Folie geformte Formling für einen Kristallisationsvorgang dann nicht weiter in diesem Formwerkzeug verweilen muss.

Der Verfahrensablauf kann weiter vereinfacht werden, wenn ein Kristallisationsprozess des thermoplastischen Folienmaterials mittels des in Maschinenrichtung stromab der Kristallisationsstrecke angeordneten Formwerkzeugs beendet wird.

Im Allgemeinen wurde erkannt, dass das gesamte Herstellungsverfahren von Produkten aus einem thermoplastischen Folienmaterial, insbesondere aus einem C-PET-Material, beschleunigt werden kann, wenn man einzelne Prozesse entkoppelt, das heißt insbesondere Prozesse, welche bisher in einem einzigen Formwerkzeug ausgeführt wurden. Zwar wird hierdurch mindestens ein weiteres Formwerkzeug gebraucht, aber die einzelnen Formwerkzeuge können baulich meist einfacher gestaltet werden.

Insofern ist es vorteilhaft, wenn Prozesse, wie beispielsweise das Umformen eines thermoplastischen Folienmaterials und das Durchkristallisieren dieses thermoplastischen Folienmaterials nach dem Umformen, vereinzelt werden.

Darüber hinaus bietet ein außerhalb eines Formwerkzeugs, insbesondere außerhalb eines Primär-Formwerkzeugs, hauptsächlich ablaufender Kristallisationsvorgang wesentlich mehr Möglichkeiten hinsichtlich einer Manipulation von Kristallisationsparametern.

Es ist vorteilhaft, wenn entlang der Kristallisationsstrecke ein voreinstellbares Temperaturprofil gehalten wird. Mittels eines derartigen voreinstellbaren Temperaturprofils können beispielsweise unterschiedliche Temperaturbereiche entlang der Kristallisationsstrecke eingerichtet werden, wodurch die Kristallisation von thermoplastischen Folienmaterial zusätzlich beeinflusst werden kann.

Ein derartiges Temperaturprofil kann hierbei konstant beibehalten sein, so dass sich entlang der Kristallisationsstrecke etwa ein statisches Temperaturprofil erstreckt. Oder aber ein Temperaturprofil ist veränderbar, wobei sich ein dynamisches Temperaturprofil ergibt, welches zum Beispiel in Abhängigkeit von einem Kristallisationsfortschritt veränderbar ist.

Eine besonders bevorzugte Verfahrensvariante sieht vor, dass das thermoplastische Material unabhängig von einem Arbeitstakt eines Formwerkzeugs kristallisieren kann, wodurch dem thermoplastischen Material außerhalb des Formwerkzeugs ausschließliche oder zusätzliche Kristallisationszeit gegeben wird, um zu kristallisieren. Hierdurch kann das Formwerkzeug wesentlich effektiver genutzt werden.

Diese ausschließliche oder zusätzliche Kristallisationszeit kann konstruktiv besonders einfach mittels der Kristallisationsstrecke zur Verfügung gestellt werden.

Vorzugsweise wird dem thermoplastischen Material bzw. dem Formling diese ausschließliche oder zusätzliche Kristallisationszeit vor einem weiteren Formwerkzeug bzw. dem hier eingesetzten Sekundär-Formwerkzeug zur Verfügung gestellt. Die bedeutet, dass diese ausschließliche oder zusätzliche Kristallisationszeit zur Verfügung steht, bevor ein Formling bzw. ein Produkt endgeformt werden.

Die Aufgabe der Erfindung wird nach einem weiteren Aspekt der Erfindung ferner gelöst von einer Vorrichtung zum Formen, insbesondere zum Thermoformen, einer Folie aus einem thermoplastischen Folienmaterial, insbesondere aus einem C-PET-Material zu einem Produkt, mit einem Umformwerkzeug umfassend eine Gesamtbearbeitungsfläche, welche in einen einlaufenden Formbereich und in einen auslaufenden Formbereich unterteilt ist, wobei stromab und außerhalb des Umformwerkzeugs eine Kristallisationsstrecke angeordnet ist, entlang welcher das Folienmaterial nach dem Umformen zumindest teilweise kristallisierbar ist.

Diese Kristallisationsstrecke kann räumlich besonders unproblematisch außerhalb dieses Umformwerkzeugs konstruiert sein.

Hierbei ist vorliegend ein Kristallisationsbereich der Vorrichtung zumindest teilweise aus dem Umformwerkzeug heraus in eine von dem Umformwerkzeug verschiedene Kristallisationsstrecke hinein verlagert.

Weiterhin Ist stromab der Kristallisationsstrecke ein Sekundär-Formwerkzeug angeordnet ist, mittels welcher der Kristallisierungsgrad des thermoplastischen Folienmaterials steuerbar ist, können Produkte aus einem thermoplastischen Material qualitativ noch höherwertiger hergestellt werden. Außerdem kann auf einen Kristallisationsvorgang wesentlich zielgerichteter Einfluss genommen werden.

Des Weiteren kann die Produktivität an dem Umformwerkzeug nochmals verbessert werden, wenn die Gesamtbearbeitungsfläche des Umformwerkzeugs beheizt ist.

Die Gesamtbearbeitungsfläche des Umformwerkzeugs setzt sich in der Regel aus dem einlaufenden und dem auslaufenden Formbereich zusammen, wobei der einlaufende Formbereich zum Umformen der Folie oftmals zusätzlich beheizt und der auslaufende Formbereich zum Beenden eines Kristallisationsvorgangs oftmals aktiv gekühlt sind.

Ist nun die Gesamtbearbeitungsfläche des Umformwerkzeugs beheizt kann das gesamte Umformwerkzeug, also auch der auslaufende Formbereich zum Umformen der Folie genutzt werden, wodurch sich eine Umform-Kapazität an dem Umformwerkzeug sogleich verdoppeln lässt.

Ferner kann auf eine Kühleinrichtung verzichtet werden, wodurch das Umformwerkzeug signifikant einfacher baut.

Insofern ist es vorteilhaft, wenn sowohl der einlaufende Formbereich des Umformwerkzeugs als auch der auslaufende Formbereich dieses Umformwerkzeugs beheizbar sind.

Eine vorteilhafte Ausführungsvariante sieht vor, dass das Umformwerkzeug stromauf der Kristallisationsstrecke beheizbar und ein weiteres Formwerkzeug stromab der Kristallisationsstrecke kühlbar ist. Hierdurch kann eingangsseitig ein beheiztes Primär-Formwerkzeug und insbesondere ausgangsseitig ein gekühltes Sekundär-Formwerkzeug bereitgestellt werden.

Erfindungsgemäß ist weiterhin die Kristallisationsstrecke zumindest bereichsweise beheizbar, somit kann ein an der Kristallisationsstrecke ablaufender Kristallisationsvorgang noch besser beeinflusst werden, wobei die Kristallisationsstrecke kumulativ oder alternativ zumindest bereichsweise kühlbar ist, somit kann an der Kristallisationsstrecke noch gezielter auf einen Kristallisationsvorgang Einfluss genommen werden.

Eine weitere besonders vorteilhafte Ausführungsvariante sieht vor, dass die Kristallisationsstrecke eine Rotationsache umfasst, um welche herum eine Hauptkristallisation durchführbar ist. Hierdurch können neben einer linear geraden Kristallisationsstrecke, an welcher die Folie eher translatorisch in Maschinenrichtung bewegt werden, kumulativ oder alternativ auch rotatorisch bewegt werden.

Dies ist insbesondere dann vorteilhaft, wenn die Folie beispielsweise als Nutzen vorkonfektioniert vorliegt.

Somit kann eine kompaktere Bauform realisiert werden als bei einer rein gerade ausgeführten Kristallisationsstrecke.

Ferner ist es in diesem Zusammenhang vorteilhaft, wenn die Kristallisationsstrecke an einer Rotationseinrichtung, insbesondere an einem Drehtisch, angeordnet ist. Hierdurch gelangt es insbesondere die Kristallisationsstrecke gebogen bzw. gekrümmt auszugestalten. Darüber hinaus können auch Bearbeitungswerkzeuge bzw. Bearbeitungsstationen kompakt kreisförmig angeordnet werden.

Insofern ist es vorliegend zweckmäßig, wenn die Kristallisationsstrecke zumindest teilweise gebogen ausgestaltet ist, und insofern mindestens einen Kurvenabschnitt umfasst.

Die Aufgabe der Erfindung wird nach einem weiteren Aspekt der Erfindung auch noch von einer Form-Füll-Verschließanlage zum Herstellen, Befüllen und anschließendem Verschlie-ßen von Produkten aus thermoplastischem Folienmaterial, insbesondere aus C-PET-Material, mit einer Formstation zum Formen des thermoplastischen Folienmaterials zu Produkten, insbesondere mit einer Vereinzelungsstation zum Vereinzeln der Produkte aus dem thermoplastischen Folienmaterial, und mit einer Bearbeitungsstrecke gelöst, entlang welcher das thermoplastische Folienmaterial in Maschinenrichtung durch die Anlage bewegt wird, wobei sich die Form-Füll-Schließanlage durch eine Kristallisationsstrecke auszeichnet, entlang welcher das Folienmaterial nach dem Umformen zumindest teilweise kristallisierbar ist, wobei die Kristallisationsstrecke in Maschinenrichtung stromab der Formstation angeordnet ist.

Mittels der vorliegenden Kristallisationsstrecke kann die Kristallisation des thermoplastischen Materials auch unabhängig von der Formstation und damit auch von einem Umformwerkzeug vorgenommen werden.

Vorteilhaftweise umfassen die hier vorgestellten Anlagen noch eine Vereinzelungsstation zum Vereinzeln von Produkten aus der Folie mit einer Bandstahlstanze oder einer Durchfallstanze, wobei die Vereinzelungsstation stromab der weiteren Formstation angeordnet ist, so dass die Produkte auch gleich ausgestanzt werden können.

Es versteht sich, dass an den hier beschriebenen Anlagen auch andere Vereinzelungsstationen vorgesehen sein können, genauso wie generell noch zusätzliche Bearbeitungsstationen, wie zum Beispiel eine Stapelstation.

An dieser Stelle sei nochmals explizit erwähnt, dass sich die hier beschriebenen Anlage jeweils durch eine Kristallisationsstrecke auszeichnen können, deren Merkmale vorliegend auch insbesondere im Zusammenhang mit einer der hier vorliegenden Vorrichtung offenbart sind.

An dieser Stelle sei auch noch darauf hingewiesen, dass im Rahmen der hier vorliegenden Patentanmeldung unbestimmte Artikel und unbestimmte Zahlenangaben wie "ein...", "zwei..." usw. im Regelfall als mindestens-Angaben zu verstehen sein sollen, also als "mindestens ein...", "mindestens zwei..." usw., sofern sich nicht etwa aus dem Kontext oder dem konkreten Text einer bestimmten Stelle ergibt, dass etwa dort nur "genau ein...", "genau zwei..." usw. gemeint sein soll.

Ferner sei noch erwähnt, dass im Rahmen der hier vorliegenden Patentanmeldung der Ausdruck "insbesondere" immer so zu verstehen sei, dass mit diesem Ausdruck ein optionales, bevorzugtes Merkmal eingeleitet wird. Der Ausdruck ist nicht als "und zwar" und nicht als "nämlich" zu verstehen.

Es versteht sich, dass die Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

Weitere Merkmale, Effekte und Vorteile vorliegender Erfindung werden anhand anliegender Zeichnung und nachfolgender Beschreibung erläutert, in welchen beispielhaft verschiedene Anlagen zum Herstellen von Produkten aus thermoplastischem Folienmaterial mit einer Kristallisationsstrecke dargestellt und beschrieben sind.

In der Zeichnung zeigen:

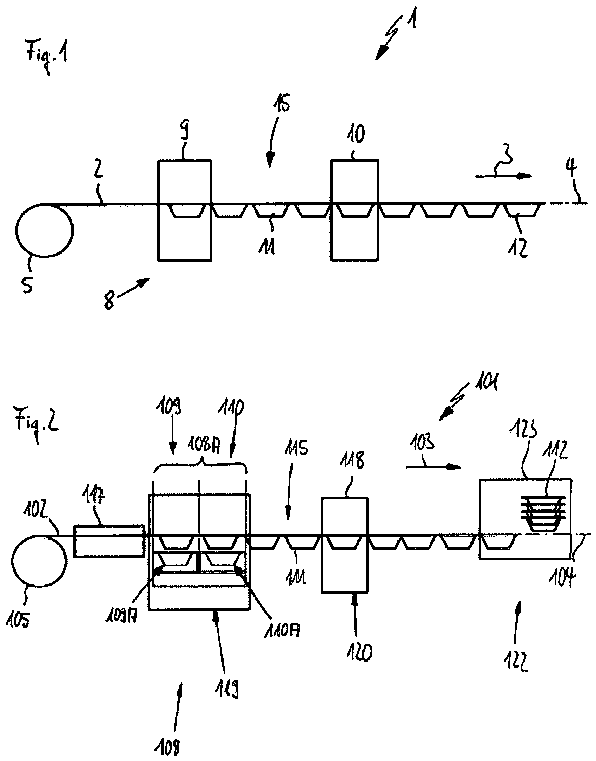

- Figur 1: schematisch eine Modellansicht einer Vorrichtung zum Thermoformen einer Folie mit einem Umformwerkzeug umfassend einen einlaufenden Formbereich und in einen auslaufenden Formbereich sowie eine dazwischen angeordnete Kristallisationsstrecke;
- Figur 2: schematisch eine detailliertere Modellansicht einer weiteren Vorrichtung mit einem Umformwerkzeug, einer Kristallisationsstrecke und einem weiteren Formwerkzeug;

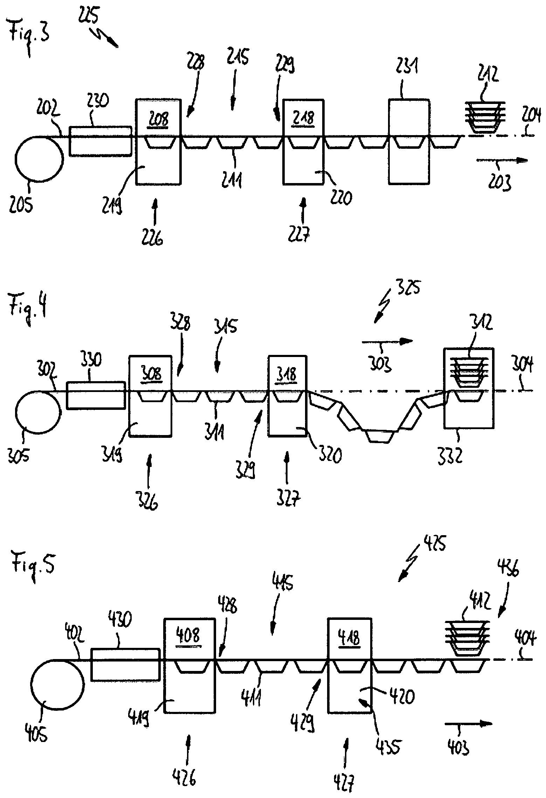

- Figur 3: schematisch eine Modellansicht einer Anlage, bei welcher eine umgeformte Folie außerhalb eines Formwerkzeugs in Maschinenrichtung entlang einer Kristallisationsstrecke bewegt wird, um das Folienmaterial entlang der Kristallisationsstrecke zumindest teilweise zu kristallisieren, bei welcher hinter einer zweiten Formstation eine Bandstahlstanze angeordnet ist;
- Figur 4: schematisch eine Modellansicht einer alternativen Anlage, bei welcher eine umgeformte Folie außerhalb eines Formwerkzeugs in Maschinenrichtung entlang einer Kristallisationsstrecke bewegt wird, um das Folienmaterial entlang der Kristallisationsstrecke zumindest teilweise zu kristallisieren, bei welcher hinter einer zweiten Formstation eine Durchfallstanze angeordnet ist;
- Figur 5: schematisch eine Modellansicht einer weiteren Anlage, bei welcher eine umgeformte Folie außerhalb eines Formwerkzeugs in Maschinenrichtung entlang einer Kristallisationsstrecke bewegt wird, um das Folienmaterial entlang der Kristallisationsstrecke zumindest teilweise zu kristallisieren, bei welcher eine Stanzeinrichtung in der zweiten Formstation integriert ist;

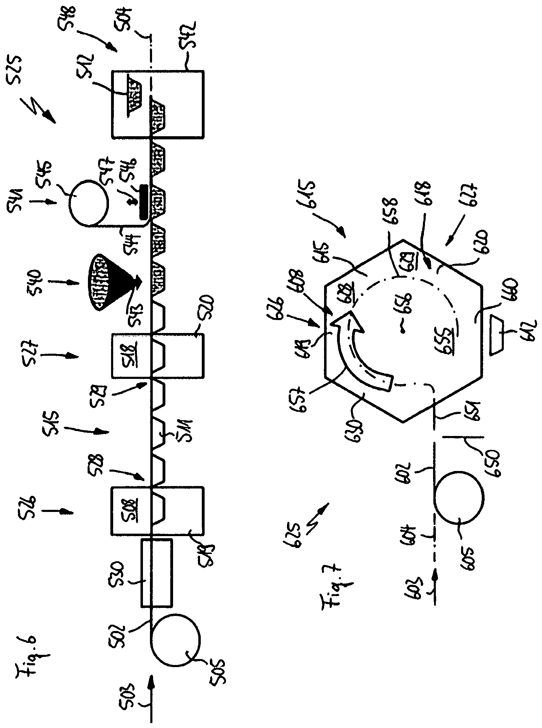

- Figur 6: schematisch eine Modellansicht einer Anlage in Gestalt einer Form, Füll- und Verschließanlage, bei welcher eine umgeformte Folie wieder außerhalb eines Formwerkzeugs in Maschinenrichtung entlang einer Kristallisationsstrecke bewegt wird, um das Folienmaterial entlang der Kristallisationsstrecke zumindest teilweise zu kristallisieren; und
- Figur 7: schematisch eine Modellansicht einer anderen Anlage mit einem Drehtisch, an welchem eine umgeformte Folie außerhalb eines Formwerkzeugs in Maschinenrichtung entlang einer Kristallisationsstrecke bewegt wird, um das Folienmaterial entlang der Kristallisationsstrecke zumindest teilweise zu kristallisieren.

Gemäß der Darstellung nach der Figur 1 ist mit einem ersten Ausführungsbeispiel eine Vorrichtung 1 zum Formen, insbesondere zum Thermoformen, einer Folie 2 aus einem thermoplastischen Folienmaterial (nicht gesondert beziffert) gezeigt, wobei die Folie 2 in Maschinenrichtung 3 durch die Vorrichtung 1 entlang einer Bearbeitungsstrecke 4 transportiert wird. Hierbei wird die Folie 2 von einem Coil 5 abgewickelt. Die Bearbeitungsstrecke 4 ist hierbei linear und geradlinig ausgestaltet. Als thermoplastisches Folienmaterial ist hier ein C-PET-Material im Einsatz.

Die Vorrichtung 1 umfasst in diesem Ausführungsbeispiel ein Umformwerkzeug 8 mit einem einlaufenden Formbereich 9 sowie einem weiter stromab angeordneten auslaufenden Formbereich 10, um die Folie 2 in Formlinge 11 und letztendlich in fertige Produkte 12 zu formen.

Vorliegend bilden der einlaufende Formbereich 9 und der auslaufende Formbereich 10 hierbei eine Gesamtbearbeitungsfläche (nicht nochmals beziffert) des Umformwerkzeugs 8, zumindest hinsichtlich der Formgebung der Formlinge 11 bzw. der fertigen Produkte 12.

Darüber hinaus umfasst die Vorrichtung 1 eine Kristallisationsstrecke 15, an welcher das thermoplastische Folienmaterial der umgeformten Folie 2 durchkristallisieren kann.

Die Kristallisationsstrecke 15 ist in diesem Ausführungsbeispiel zwischen dem einlaufenden Formbereich 9 und dem auslaufenden Formbereich 10 angeordnet und erstreckt sich in Maschinenrichtung 3.

Außerdem ist die Kristallisationsstrecke 15 eine Teilstrecke (nicht gesondert beziffert) der Bearbeitungsstrecke 4 und kann innerhalb der Bearbeitungsstrecke 4 nahezu beliebig lang ausgestaltet sein.

Die Kristallisationsstrecke 15 weist in Maschinenrichtung 3 zumindest die Größe des einlaufenden Formbereichs 9 auf.

Hierbei wird ein Kristallisationsvorgang mit dem Umformen der Folie 2 an dem einlaufenden Formbereich 9 eingeleitet und an der Kristallisationsstrecke 15 fortgeführt, wobei der Kristallisationsvorgang anschließend an dem auslaufenden Formbereich 10 abgeschlossen werden kann.

Mittels der Kristallisationsstrecke 15 gelingt es, den Kristallisationsvorgang insbesondere aus dem einlaufenden Formbereich 9 heraus zu verlagern, wodurch die Schließzeit des Umformwerkzeugs 8 signifikant reduziert werden kann. Hierdurch kann mit der Vorrichtung 1 eine höhere Taktrate beim Umformen der Folie 2 erzielt werden.

Ferner kann mittels der Kristallisationsstrecke 15 der Kristallisationsvorgang insgesamt vielfältiger beeinflusst werden, beispielsweise indem die Kristallisationsstrecke 15 zusätzlich beheizt und/oder gekühlt werden kann, insbesondere in Abhängigkeit von der Wahl des thermoplastischen Materials und/oder der zu verarbeitenden Folie, etwa hinsichtlich der Foliendicke.

Gemäß der Darstellung nach der Figur 2 ist ein weiteres Ausführungsbeispiel einer Vorrichtung 101 zum Formen, insbesondere zum Thermoformen, einer Folie 102 aus einem thermoplastischen Folienmaterial zu einem Formling 111 bzw. einem fertigen Produkt 112 mit einem Umformwerkzeug 108 gezeigt. Auch hier ist als thermoplastisches Folienmaterial hier ein C-PET-Material im Einsatz.

Das Umformwerkzeug 108 besitzt einen einlaufenden Formbereich 109 und einen auslaufenden Formbereich 110, welche eine einlaufende Formkavität 109A sowie durch eine auslaufende Formkavität 110A umfassen.

Die Besonderheit bei dem Umformwerkzeug 108 ist in diesem Ausführungsbeispiel auch darin zu sehen, dass sowohl der einlaufende Formbereich 109 und der auslaufende Formbereich 110 beheizbar sind, so dass die zum Umformen der Folie 102 zur Verfügung stehenden Formkavitäten 109A und 110A an dem Umformwerkzeug 108 verdoppelt sind.

Insofern ist auch die an dem Umformwerkzeug 108 vorhandene Gesamtbearbeitungsfläche 108A, mittels welcher die Folie 102 bearbeitet werden kann, beheizbar.

Die Folie 102 wird in Maschinenrichtung 103 durch die Vorrichtung 101 entlang einer linearen und geradlinigen Bearbeitungsstrecke 104 transportiert. Hierbei wird die Folie 102 wieder von einem Coil 105 abgewickelt.

Stromauf vor dem Umformwerkzeug 108 ist noch eine zusätzliche Heizeinrichtung 117 platziert, um die Folie 102 vor dem Umformen mit dem Umformwerkzeug 108 vorzuwärmen.

Stromab hinter dem Umformwerkzeug 108 ist in die eigentliche Bearbeitungstrecke 104 eine Kristallisationsstrecke 115 integriert, an welcher das thermoplastische Material im Anschluss an das Umformen kristallisieren kann. Die Kristallisationsstrecke 115 kann hierbei nahezu beliebig lang ausgeführt werden.

Weiter stromab ist ein weiteres Formwerkzeug 118 angeordnet, an welchem die Folie 102 bzw. der Formling 111 abschließend endgeformt werden kann.

Insofern stellt das Umformwerkzeug 108 im Sinne vorliegender Erfindung ein Primär-Formwerkzeug 119 und das weitere Formwerkzeug 118 ein Sekundär-Formwerkzeug 120 dar.

Mittels des weiteren Formwerkzeugs 118 bzw. Sekundär-Formwerkzeugs 120 kann der Kristallisierungsgrad des thermoplastischen Folienmaterials gesteuert werden, wobei das Sekundär-Formwerkzeug 120 aktiv gekühlt werden kann.

Das bedeutet auch, dass bei diesem Ausführungsbeispiel das Umformwerkzeug 108 stromauf der Kristallisationsstrecke 115 beheizbar und ein weiteres Formwerkzeug 118 stromab der Kristallisationsstrecke 115 kühlbar ist.

Ferner kann die Kristallisationsstrecke 115 hierbei zumindest bereichsweise beheizt und/oder gekühlt werden, wodurch der an der Kristallisationsstrecke 115 ablaufende Kristallisationsvorgang zusätzlich manipuliert werden kann.

Am Ende 122 der Bearbeitungsstrecke 104 ist noch eine Stanz- und Stapeleinrichtung 123 vorgesehen, an welcher die fertigen Produkte 112 ausgestanzt und anschließend gestapelt werden können.

Gemäß der Darstellung nach der Figur 3 ist ein anderes Ausführungsbeispiel mit einer Anlage 225 zum Herstellen von Produkten 212 aus thermoplastischem Folienmaterial, insbesondere aus C-PET-Material, gezeigt, wobei die Produkte 212 aus einer Folie 202 geformt werden, welche von einem Coil 205 abgewickelt und entlang einer Bearbeitungsstrecke 204 in Maschinenrichtung 203 durch die Anlage 225 hindurch transportiert wird.

Die Anlage 225 zeichnet sich insbesondere durch eine erste Formstation 226 mit einem ersten Formwerkzeug 208, eine weitere Formstation 227 mit einem weiteren Formwerkzeug 218 sowie eine zwischen der ersten Formstation 226 und der weiteren Formstation 227 angeordnete Kristallisationsstrecke 215 aus.

Genauer gesagt ist die erste Formstation 226 in einem Eingangsbereich 228 der Kristallisationsstrecke 215 und die weitere Formstation 227 in einem Ausgangsbereich 229 platziert.

Demzufolge verkörpert das erste Formwerkzeug 208 der ersten Formstation 226 ein Primär-Formwerkzeug 219 der Anlage 225 und das weitere Formwerkzeug 218 der weiteren Formstation 227 verkörpert ein Sekundär-Formwerkzeug 220 der Anlage 225.

Die Kristallisationsstrecke 215 kann hierbei nahezu beliebig lang ausgeführt sein. Jedenfalls ist auch diese Kristallisationsstrecke 215 dazu eingerichtet, einen an der ersten Formstation 226 eingeleiteten Kristallisationsvorgang als Hauptkristallisation mit all den hier beschriebenen Vorteilen weiterzuführen, vorzugsweise bis in die weitere Formstation 227 hinein, wo der Kristallisationsvorgang dann abgeschlossen werden kann.

Darüber hinaus umfasst die Anlage 225 noch eine Heizstation 230, mittels welcher die Folie 202 stromauf der ersten Formstation 226 vorgeheizt werden kann, bevor sie zu Formlingen 211 bzw. den fertigen Produkten 212 umgeformt wird.

Weiter stromab und hinter der weiteren Formstation 227 ist eine Bandstahlstanzstation 231 angeordnet, mittels welcher die Produkte 212 aus der Folie 202 ausgestanzt werden können.

Gemäß der Darstellung nach der Figur 4 ist ein weiteres Ausführungsbeispiel mit einer alternativen Anlage 325 zum Herstellen von Produkten 312 aus thermoplastischem Folienmaterial, insbesondere aus C-PET-Material, gezeigt.

Die Produkte 312 werden hierbei aus einer Folie 302 ausgeformt werden, wobei die Folie 302 von einem Coil 305 abgewickelt wird und anschließend in Maschinenrichtung 303 entlang einer Bearbeitungsstrecke 304 durch die Anlage 325 hindurch transportiert wird.

Auch die Anlage 325 weist insbesondere eine erste Formstation 326 mit einem ersten Formwerkzeug 308, eine weitere Formstation 327 mit einem weiteren Formwerkzeug 318.

Zwischen der ersten Formstation 326 und der weiteren Formstation 327 ist wieder eine Kristallisationsstrecke 315 angeordnet, wobei die erste Formstation 326 in einem Eingangsbereich 328 der Kristallisationsstrecke 315 und die weitere Formstation 327 in einem Ausgangsbereich 329 platziert ist.

Demzufolge verkörpert das erste Formwerkzeug 308 der ersten Formstation 326 ein Primär-Formwerkzeug 319 der Anlage 325 und das weitere Formwerkzeug 318 der weiteren Formstation 327 verkörpert ein Sekundär-Formwerkzeug 320 der Anlage 325.

Die Kristallisationsstrecke 315 kann hierbei nahezu beliebig lang ausgeführt sein und diese Kristallisationsstrecke 315 ist dazu eingerichtet, einen an der ersten Formstation 326 eingeleiteten Kristallisationsvorgang als Hauptkristallisation mit all den hier beschriebenen Vorteilen weiterzuführen, vorzugsweise bis in die weitere Formstation 327 hinein, wo der Kristallisationsvorgang dann wiederum abgeschlossen werden kann.

Auch die Anlage 325 weist eine Heizstation 330 auf, mittels welcher die Folie 302 stromauf der ersten Formstation 326 vorgeheizt werden kann, bevor sie zu Formlingen 311 bzw. den fertigen Produkten 312 umgeformt wird.

Hinter der weiteren Formstation 327 ist noch eine Stanz-Stapelstation 332 angeordnet, mittels welcher die fertigen Produkte 312 aus der Folie 302 ausgestanzt und anschließend gestapelt werden können.

Auch das gemäß der Darstellung nach der Figur 5 illustrierte Ausführungsbeispiel zeigt eine Anlage 425, mittels welcher Produkte 412 aus einem thermoplastischen Folienmaterial, insbesondere aus C-PET-Material, hergestellt werden können.

Hierbei werden die Produkte 412 aus einer Folie 402 ausgeformt werden. Hierzu wird die Folie 402 von einem Coil 405 abgewickelt und die Folie 402 wird anschließend entlang einer Bearbeitungsstrecke 404 in Maschinenrichtung 403 durch die Anlage 425 hindurch transportiert.

Auch diese Anlage 425 nutzt insbesondere eine erste Formstation 426 mit einem ersten Formwerkzeug 408 und eine weitere Formstation 427 mit einem weiteren Formwerkzeug 418, zwischen welchen eine Kristallisationsstrecke 415 platziert ist.

Die weitere Formstation 426 ist hierbei nicht nur mit dem weiteren Formwerkzeug 418 ausgerüstet, sondern sogleich mit einer Stanze (nicht explizit gezeigt und beziffert) versehen. Insofern handelt es sich bei der weiteren Formstation 426 um eine Bandstahl-Form-Stanzstation 435, die am Ende der Kristallisationsstrecke 415 verortet ist.

Während die erste Formstation 426 in einem Eingangsbereich 428 der Kristallisationsstrecke 415 ist, ist die weitere Formstation 427 bzw. die Bandstahl-Form-Stanzstation 435 insofern in einem Ausgangsbereich 429 der Kristallisationsstrecke 415 platziert.

Demzufolge verkörpert das erste Formwerkzeug 408 der ersten Formstation 426 ein Primär-Formwerkzeug 419 der Anlage 425 und das weitere Formwerkzeug 418 der weiteren Formstation 427 verkörpert ein Sekundär-Formwerkzeug 420 der Anlage 425.

Die Kristallisationsstrecke 415 kann auch in diesem Ausführungsbeispiel nahezu beliebig lang ausgeführt sein.

Die Kristallisationsstrecke 415 ist auch hier wieder dazu eingerichtet, einen an der ersten Formstation 426 eingeleiteten Kristallisationsvorgang als Hauptkristallisation mit all den hier beschriebenen Vorteilen weiterzuführen, vorzugsweise bis in die weitere Formstation 427 hinein, wo der Kristallisationsvorgang dann wiederum abgeschlossen werden kann.

An der Anlage 425 ist vor der ersten Formstation 426 eine Heizstation 430 angeordnet, mittels welcher die Folie 402 stromauf der ersten Formstation 426 vorgeheizt werden kann, bevor sie zu Formlingen 411 bzw. den fertigen Produkten 412 umgeformt wird.

Hinter der weiteren Formstation 427 bzw. der Bandstahl-Form-Stanzstation 435 werden die fertigen Produkte 412 zu einem Produktstapel 436 aufgestapelt.

Gemäß der Darstellung nach der Figur 6 ist noch ein zusätzliches Ausführungsbeispiel zu einer Form-Füll-Schließanlage 525 dargestellt, mittels welcher Produkte 512 aus einem thermoplastischen Folienmaterial hergestellt werden können, wie insbesondere aus einem C-PET-Material. Auch hier werden die Produkte 512 aus einer Folie 502 geformt, welche wieder von einem Coil 505 abgewickelt wird. Die Folie 502 wird dann in Maschinenrichtung 503 entlang einer Bearbeitungsstrecke 504 durch die Form-Füll-Verschließ-Anlage 525 hindurch transportiert, wobei die Bearbeitungsstrecke 504 geradlinig ausgebildet ist. Insofern wird die Folie 502 auch in diesem Ausführungsbeispiel translatorisch in Maschinenrichtung 503 durch die Form-Füll-Verschließ-Anlage 525 transportiert.

Die Bearbeitungsstrecke 504 umfasst an einem Teilabschnitt (nicht nochmals beziffert) eine Kristallisationsstrecke 515, welche genau wie bei den bereits vorstehend erläuterten Anlagen 225, 335 und 425 geradlinig ausgestaltet ist.

In einem Eingangsbereich 528 der Kristallisationsstrecke 512 ist eine erste Formstation 526 und einem Ausgangsbereich 529 der Kristallisationsstrecke 515 ist eine weitere Formstation 527 an der Kristallisationsstrecke 515 angeordnet.

Die erste Formstation 526 umfasst ein erstes Formwerkzeug 508, welches insofern ein Primär-Formwerkzeug 519 der Anlage 525 verkörpert.

Dementsprechend umfasst die weitere Formstation 527 ein weiteres Formwerkzeug 518, welches ein Sekundär-Formwerkzeug 520 der Anlage 525 darstellt.

Auch bei diesem weiteren Ausführungsbeispiel mit der Form-Füll-Verschließ-Anlage 525 kann die Kristallisationsstrecke 515 nahezu beliebig lang ausgeführt sein, um an der Kristallisationsstrecke 515 einen an der ersten Formstation 526 eingeleiteten Kristallisationsvorgang als Hauptkristallisation weiter zu führen, wobei diese Hauptkristallisation bis in die weitere Formstation 525 hinein erfolgen kann, an welcher der Kristallisationsvorgang letztendlich dann auch abgeschlossen werden kann.

Ähnlich wie bei den zuvor beschriebenen Anlagen 225, 325 und 425 besitzt die Form-Füll-Verschließ-Anlage 525 noch eine Heizstation 530, mittels welcher die Folie 502 stromauf der ersten Formstation 526 bedarfsweise vorgeheizt werden kann, bevor die Folie 502 dann mit Hilfe des Primär-Formwerkzeugs 519 zu Formlingen 512 beziehungsweise zu den fertigen Produkten 512 umgeformt wird.

Hinter der zweiten Formstation 527 mit dem Sekundär-Formwerkzeug 520 befindet sich in Maschinenrichtung 503 weiter stromab an der Bearbeitungsstrecke 504 eine Befüllstation 540, eine Verschließstation 541 sowie eine Vereinzelungsstation 542, so dass die mit der Form-Füll-Verschließ-Anlage 525 bisher hergestellten Produkte 512 anschließend sogleich mit einem nahezu beliebigen Füllgut 543 befüllt werden können.

Noch weiter stromab befindet sich hinter der Befüllstation 540 die Verschließstation 541, mittels welcher dann die mit dem jeweiligen Füllgut 543 befüllten Produkte 512 mit einer Verschließfolie 544 verschlossen werden können.

Die Verschließfolie 544 ist in diesem Ausführungsbeispiel auf einer Bevorratungsrolle 545 aufgewickelt und wird nach dem Abwickeln von dieser Bevorratungsrolle 545 und dem Auflegen auf die befüllten Produkte 512 mittels einer Versiegelungseinheit 546 an das jeweilige Produkt 512 angebracht, und zwar mit einer quer zur Maschinenrichtung 503 verlaufende Versiegelungsbewegung 547.

Die so thermogeformten, befüllten und versiegelten Produkte 512 werden dann an dem Bearbeitungsstreckenende 548 mittels der Vereinzelungsstation 542 vereinzelt, so dass letztendlich am Ende der Bearbeitungsstrecke 504 gebrauchsfertige Verpackungseinheiten (hier nicht beziffert) vorliegen.

Insofern zeigt das in der Figur 6 dargestellte Ausführungsbeispiel, wie beispielhaft eine Einheit aus Befüllstation 540, Verschließstation 541 und Vereinzelungsstation 542 mit der vorliegenden Kristallisationsstrecke 515 kombiniert werden kann, wobei vorliegend auf die einzelne Ausgestaltung der Befüllstation 540, der Verschließstation 541 sowie der Vereinzelungsstation 542 nicht weiter eingegangen werden muss, da diese konstruktions- und verfahrenstechnisch vielfältig bekannt sind.

Gemäß der Darstellung nach der Figur 7 ist nochmal beispielhaft ein anderes Ausführungsbeispiel in Gestalt einer Drehtisch-Anlage 625 zum Herstellen von Produkten 612 aus einem thermoplastischen Folienmaterial in Gestalt einer Folie 602 dargestellt, wobei es sich bei dem thermoplastischen Folienmaterial um ein C-PET-Material handelt. Die Folie 602 wird hierbei wieder von einem Coil 605 abgewickelt und anschließend mittels einer Zuschneideinheit 650 zu einzelnen Nutzen 651 beziehungsweise Zuschnitten vorkonfektioniert.

Diese vorkonfektionierten Nutzen 651 werden dann in Maschinenrichtung 603 an einen Drehtisch 655 übergeben, welcher um eine Rotationsachse 656 rotiert. Somit ist die Maschinenrichtung 603 nicht nur geradlinig ausgeführt, wie bei den vorhergehend beschriebenen Anlagen 225, 325, 425 und 525, sondern besitzt darüber hinaus auch eine kreisförmige Komponente (hier nicht nochmals eingezeichnet und beziffert), so dass dementsprechend auch eine Bearbeitungsstrecke 604 einen Kurventeilabschnitt 658 aufweist.

Mit Drehen des Drehtisches 655 gemäß der Drehrichtung 657 gelangen die vereinzelten Nutzen 651 sukzessive zu den einzelnen Bearbeitungsstationen der Drehtisch-Anlage 625, als da sind eine Heizstation 630, eine erste Formstation 626 mit einem ersten Formwerkzeug 608 beziehungsweise mit einem Primär-Formwerkzeug 619, eine zweite Formstation 627 mit einem weiteren Formwerkzeug 618 beziehungsweise Sekundär-Formwerkzeug 620, und einer Austragstation 660.

An dieser Stelle sei noch erwähnt, dass die zweite Formstation 627 optional auch als Bandstahl-Form-Stanzstation (hier nicht explizit beziffert) ausgeführt sein kann, wie dies zum Beispiel hinsichtlich des Ausführungsbeispiels gemäß der Figur 5 erläutert ist. Bei einer derartigen optionalen Ausführungsvariante können dann die Produkte 612 an der Austragstation 660 gegebenenfalls sogleich gestapelt werden.

Jedenfalls befindet sich zwischen der ersten Formstation 626 und der zweiten Formstation 627 wieder eine Kristallisationsstrecke 615, so dass sich an einem Eingangsbereich 628 der Kristallisationsstrecke 615 die erste Formstation 626 befindet, und an einem Ausgangsbereich 629 der Kristallisationsstrecke 615 demensprechend die zweite Formstation 627 angeordnet ist.

Die Kristallisationsstrecke 615 ist an dem Drehtisch 655 gebogen beziehungsweise gekrümmt ausgeführt, jedenfalls ist die Kristallisationsstrecke 615 Bestandteil des vorstehend erwähnten Kurventeilabschnitts 658 der Bearbeitungsstrecke 604.

Hinsichtlich der Drehtisch-Anlage 625 zum Herstellen von Produkten 612 ist ferner festzuhalten, dass der Transport der Folie 602 beziehungsweise der vereinzelten Nutzen 651 beziehungsweise Zuschnitte zu den einzelnen Bearbeitungsstationen 630, 626, 627 sowie 660 und darüber hinaus auch der Kristallisationsstrecke 615 mittels des Drehtischs 655 erfolgt.

Hierbei kann die Anzahl der Bearbeitungsstationen je nach Produktanforderung und Kristallisationsstrecke 612 variieren.

Es versteht sich, dass die Folie 602 beziehungsweise die vereinzelten Nutzen 651 beziehungsweise Zuschnitte auch außerhalt des Drehtisches 655 vorgeheizt werden können. Jedenfalls veranschaulicht die Drehtisch-Anlage 625 eine sehr kompakt und kürzer bauende Anlage zum Herstellen von Produkten aus einem thermoplastischen Folienmaterial im Sinne vorliegender Erfindung.

## Patentansprüche

1. Verfahren zum Kristallisieren einer Folie (2; 102, 202; 302; 402; 502; 602) aus einem thermoplastischen Folienmaterial, insbesondere aus einem C-PET-Material, zu einem Produkt (12; 112; 212; 312; 412; 512; 612), bei welchem ein Kristallisationsvorgang durch Umformen des thermoplastischen Folienmaterials innerhalb eines Umformwerkzeugs (8; 108) als erstes Formwerkzeug (208; 308; 408; 508; 608) eingeleitet wird, wobei ein Großteil des Kristallisationsvorgangs entlang einer Kristallisationsstrecke (15; 115; 215; 315; 415; 515; 615) außerhalb dieses Umformwerkzeugs (8; 108) durchgeführt wird, wobei die Hauptkristallisation während einer getakteten Bewegung des thermoplastischen Folienmaterials in Maschinenrichtung erfolgt, wobei die Maschinenrichtung eine Transportrichtung bezeichnet, in welcher Folie, Formlinge bzw. Produkte entlang einer Fertigungslinie befördert werden, wobei der Kristallisationsvorgang in einem weiteren Formwerkzeug (118; 218; 318; 418; 518; 618) als Sekundär-Formwerkzeug (120; 220; 320; 420; 520; 620), beendet wird, wobei das Sekundär- Formwerkzeug (120; 220; 320; 420; 520; 620) von dem ersten Formwerkzeug (208; 308; 408; 508; 608) als ein Primär-Formwerkzeug (119; 219; 319; 419; 519; 619), verschieden ist, mittels welchem der Kristallisationsvorgang zuvor eingeleitet wurde, ***dadurch gekennzeichnet, dass***der Großteil des Kristallisationsvorgangs entlang der Kristallisationsstrecke (15; 115; 215; 315; 415; 515; 615) außerhalb der beiden Formwerkzeuge (8; 108, 118; 208, 281; 308, 318; 408, 418; 508, 518; 608,618) durchgeführt wird, während das thermoplastische Folienmaterial zwischen diesen beiden Formwerkzeugen (8; 108, 118; 208, 281; 308, 318; 408, 418; 508, 518; 608,618) transportiert wird.

2. Verfahren nach Anspruch 1 , ***dadurch gekennzeichnet, dass*** die an einem einlaufenden Formbereich (9) umgeformte Folie (2; 102, 202; 302; 402; 502; 602) nach dem Kristallisieren entlang der Kristallisationsstrecke (15; 115; 215; 315; 415; 515; 615) an das weitere Formwerkzeug (118; 218; 318; 418; 518; 618) übergeben wird, um mittels des weiteren Formwerkzeugs (118; 218; 318; 418; 518; 618) den Kristallisationsgrad des Folienmaterials zu steuern und/oder um die umgeformte Folie (2; 102, 202; 302; 402; 502; 602) mittels des weiteren Formwerkzeugs (118; 218; 318; 418; 518; 618) nachzuformen.

3. Verfahren nach Anspruch 1 oder 2, ***dadurch gekennzeichnet, dass*** die Folie (2; 102, 202; 302; 402; 502; 602) in dem ersten Formwerkzeug (208; 308; 408; 508; 608) stromauf der Kristallisationsstrecke (15; 115; 215; 315; 415; 515; 615) ausschließlich beheizt wird und/oder in dem weiteren Formwerkzeug (118; 218; 318; 418; 518; 618) stromab der Kristallisationsstrecke (15; 115; 215; 315; 415; 515; 615) gekühlt wird.

4. Verfahren nach einem der vorherigen Ansprüche, ***dadurch gekennzeichnet, dass*** ein Kristallisationsprozess des thermoplastischen Folienmaterials mittels des in Maschinenrichtung (3; 103; 203; 303; 403; 503; 603) stromauf der Kristallisationsstrecke (15; 115; 215; 315; 415; 515; 615) angeordneten ersten Formwerkzeugs (208; 308; 408; 508; 608) ausschließlich gestartet wird und/oder mittels des in Maschinenrichtung (3; 103; 203; 303; 403; 503; 603) stromab der Kristallisationsstrecke (15; 115; 215; 315; 415; 515; 615) angeordneten weiteren Formwerkzeugs (118; 218; 318; 418; 518; 618) beendet wird.

5. Verfahren nach einem der vorherigen Ansprüche, ***dadurch gekennzeichnet, dass*** das thermoplastische Material unabhängig von einem Arbeitstakt eines der ersten oder weiteren Formwerkzeuge (118; 208, 281; 308, 318; 408, 418; 508, 518; 608,618) kristallisieren kann, wodurch dem thermoplastischen Material außerhalb des ersten oder weiteren Formwerkzeugs (118; 208, 281; 308, 318; 408, 418; 508, 518; 608,618) ausschließliche oder zusätzliche Kristallisationszeit gegeben wird, um zu kristallisieren.

6. Vorrichtung (1, 101) zum Formen und Kristallisieren, insbesondere zum Thermoformen, einer Folie (2; 102, 202; 302; 402; 502; 602) aus einem thermoplastischen Folienmaterial, insbesondere aus einem C-PET-Material zu einem Produkt (12; 112; 212; 312; 412; 512; 612), mit einem Umformwerkzeug (8; 108) als erstes Formwerkzeug (208; 308; 408; 508; 608) umfassend eine Gesamtbearbeitungsfläche (108A), welche in einen einlaufenden Formbereich (9; 109) und in einen auslaufenden Formbereich (10; 110) unterteilt ist, und mit einer Bearbeitungsstrecke (4; 104; 204; 304; 404; 504; 604), entlang welcher die Folie (2; 102, 202; 302; 402; 502; 602) in Maschinenrichtung (3; 103; 203; 303; 403; 503; 603) durch das Umformwerkzeug (8; 108) bewegt wird, ***dadurch gekennzeichnet, dass*** stromab und außerhalb des Umformwerkzeugs (8, 108) zwischen dem einlaufenden Formbereich (9, 109) und dem auslaufenden Formbereich (10, 110) eine Kristallisationsstrecke (15; 115; 215; 315; 415; 515; 615) angeordnet ist, welche in Maschinenrichtung (3; 103; 203; 303; 403; 503; 603) zumindest die Größe des einlaufenden Formbereichs (9, 109) aufweist, wobei die Maschinenrichtung eine Transportrichtung bezeichnet, in welcher Folie, Formlinge bzw. Produkte entlang einer Fertigungslinie befördert werden und wobei die Kristallisationsstrecke (15; 115; 215; 315; 415; 515; 615) zumindest bereichsweise beheizbar und/oder kühlbar ist.

7. Vorrichtung (1, 101) nach Anspruch 6, ***dadurch gekennzeichnet, dass*** die Gesamtbearbeitungsfläche (108A) des Umformwerkzeugs (8; 108) beheizt ist, wobei sowohl ein einlaufender Formbereich (9; 109) des Umformwerkzeugs (8; 108 als auch ein auslaufender Formbereich (10; 110) dieses Umformwerkzeugs (8; 108) beheizbar sind.

8. Vorrichtung (1, 101) nach Anspruch 6, ***dadurch gekennzeichnet, dass*** das erste Formwerkzeug (208; 308; 408; 508; 608) stromauf der Kristallisationsstrecke (15; 115; 215; 315; 415; 515; 615) beheizbar und das weitere Formwerkzeug (118; 218; 318; 418; 518; 618) stromab der Kristallisationsstrecke (15; 115; 215; 315; 415; 515; 615) kühlbar ist.

9. Vorrichtung (1, 101) nach einem der Ansprüche 6 bis 8, ***dadurch gekennzeichnet, dass*** die Kristallisationsstrecke (15; 115; 215; 315; 415; 515; 615) an einer Rotationseinrichtung, insbesondere an einem Drehtisch (655), angeordnet ist.

10. Anlage (225; 325, 425) zum Herstellen von Produkten (12; 112; 212; 312; 412; 512; 612) aus thermoplastischem Folienmaterial, insbesondere aus C-PET-Material, umfassend eine Vorrichtung (1, 101) zum Formen und Kristallisieren gemäß einem der Ansprüche 6 bis 9, wobei das Umformwerkzeug (8; 108) als erstes Formwerkzeug (208; 308; 408; 508; 608) in einer Formstation (226; 326; 426; 526; 626) zum Formen des thermoplastischen Folienmaterials zu Produkten (12; 112; 212; 312; 412; 512; 612) der Anlage (225; 325, 425) angeordnet ist, ***dadurch gekennzeichnet, dass*** die Anlage als Form-Füll-Verschließanlage (525) zum Herstellen, Befüllen und anschließendem Verschließen von Produkten (12; 112; 212; 312; 412; 512; 612) aus thermoplastischem Folienmaterial, insbesondere aus C-PET-Material ausgestaltet ist.

## Claims

1. Method for the crystallization of a film (2; 102, 202; 302; 402; 502; 602) made of a thermoplastic film material, in particular made of a CPET material, to form a product (12; 112; 212; 312; 412; 512; 612), in which a crystallization process is initiated by shaping the thermoplastic film material within a forming tool (8; 108) as first moulding tool (208; 308; 408; 508; 608), wherein a majority of the crystallization process is carried out along a crystallization section (15; 115; 215; 315; 415; 515; 615) outside this forming tool (8; 108), wherein the main crystallization is effected during a clocked movement of the thermoplastic film material in the machine direction, wherein the machine direction denotes a transport direction in which film, blanks or products are conveyed along a production line, wherein the crystallization process is ended in a further moulding tool (118; 218; 318; 418; 518; 618) as secondary moulding tool (120; 220; 320; 420; 520; 620), wherein the secondary moulding tool (120; 220; 320; 420; 520; 620) is different from the first moulding tool (208; 308; 408; 508; 608) as primary moulding tool (119; 219; 319; 419; 519; 619) by means of which the crystallization process was previously initiated, ***characterized in that*** the majority of the crystallization process is carried out along the crystallization section (15; 115; 215; 315; 415; 515; 615) outside the two moulding tools (8; 108, 118; 208, 281; 308, 318; 408, 418; 508, 518; 608, 618), while the thermoplastic film material is transported between these two moulding tools (8; 108, 118; 208, 281; 308, 318; 408, 418; 508, 518; 608, 618).

2. Method according to claim 1, ***characterized in that*** the film (2; 102, 202; 302; 402; 502; 602) shaped at an incoming moulding region (9) is transferred to the further moulding tool (118; 218; 318; 418; 518; 618) after the crystallization along the crystallization section (15; 115; 215; 315; 415; 515; 615), in order to control the degree of crystallization of the film material by means of the further moulding tool (118; 218; 318; 418; 518; 618) and/or in order to post-mould the shaped film (2; 102, 202; 302; 402; 502; 602) by means of the further moulding tool (118; 218; 318; 418; 518; 618).

3. Method according to claim 1 or 2, ***characterized in that*** the film (2; 102, 202; 302; 402; 502; 602) is exclusively heated in the first moulding tool (208; 308; 408; 508; 608) upstream of the crystallization section (15; 115; 215; 315; 415; 515; 615) and/or is cooled in the further moulding tool (118; 218; 318; 418; 518; 618) downstream of the crystallization section (15; 115; 215; 315; 415; 515; 615).

4. Method according to one of the preceding claims, ***characterized in that*** a crystallization process of the thermoplastic film material is exclusively started by means of the first moulding tool (208; 308; 408; 508; 608) arranged upstream of the crystallization section (15; 115; 215; 315; 415; 515; 615) in the machine direction (3; 103; 203; 303; 403; 503; 603) and/or is ended by means of the further moulding tool (118; 218; 318; 418; 518; 618) arranged downstream of the crystallization section (15; 115; 215; 315; 415; 515; 615) in the machine direction (3; 103; 203; 303; 403; 503; 603).

5. Method according to one of the preceding claims, ***characterized in that*** the thermoplastic material can crystallize independently of a working cycle of one of the first or further moulding tools (118; 208, 281; 308, 318; 408, 418; 508, 518; 608, 618), whereby the thermoplastic material outside the first or further moulding tool (118; 208, 281; 308, 318; 408, 418; 508, 518; 608, 618) is given exclusive or additional crystallization time in order to crystallize.

6. Device (1, 101) for moulding and crystallizing, in particular for thermoforming, a film (2; 102, 202; 302; 402; 502; 602) made of a thermoplastic film material, in particular made of a CPET material, to form a product (12; 112; 212; 312; 412; 512; 612), with a forming tool (8; 108) as first moulding tool (208; 308; 408; 508; 608) comprising a total processing surface area (108A), which is divided into an incoming moulding region (9; 109) and an outgoing moulding region (10; 110), and with a processing section (4; 104; 204; 304; 404; 504; 604), along which the film (2; 102, 202; 302; 402; 502; 602) is moved in the machine direction (3; 103; 203; 303; 403; 503; 603) through the forming tool (8; 108), ***characterized in that*** a crystallization section (15; 115; 215; 315; 415; 515; 615), which has at least the size of the incoming moulding region (9, 109) in the machine direction (3; 103; 203; 303; 403; 503; 603), is arranged downstream of and outside the forming tool (8, 108) between the incoming moulding region (9, 109) and the outgoing moulding region (10, 110), wherein the machine direction denotes a transport direction in which film, blanks or products are conveyed along a production line and wherein the crystallization section (15; 115; 215; 315; 415; 515; 615) can be heated and/or cooled at least in regions.

7. Device (1, 101) according to claim 6, ***characterized in that*** the total processing surface area (108A) of the forming tool (8; 108) is heated, wherein both an incoming moulding region (9; 109) of the forming tool (8; 108) and an outgoing moulding region (10; 110) of this forming tool (8; 108) can be heated.

8. Device (1, 101) according to claim 6, ***characterized in that*** the first moulding tool (208; 308; 408; 508; 608) can be heated upstream of the crystallization section (15; 115; 215; 315; 415; 515; 615) and the further moulding tool (118; 218; 318; 418; 518; 618) can be cooled downstream of the crystallization section (15; 115; 215; 315; 415; 515; 615).

9. Device (1, 101) according to one of claims 6 to 8, ***characterized in that*** the crystallization section (15; 115; 215; 315; 415; 515; 615) is arranged on a rotary device, in particular on a rotary table (655).

10. System (225; 325, 425) for producing products (12; 112; 212; 312; 412; 512; 612) made of thermoplastic film material, in particular made of CPET material, comprising a device (1, 101) for moulding and crystallizing according to one of claims 6 to 9, wherein the forming tool (8; 108) as first moulding tool (208; 308; 408; 508; 608) is arranged in a moulding station (226; 326; 426; 526; 626) for moulding the thermoplastic film material to form products (12; 112; 212; 312; 412; 512; 612) of the system (225; 325, 425), ***characterized in that*** the system is designed as a form, fill and seal system (525) for producing, filling and then sealing products (12; 112; 212; 312; 412; 512; 612) made of thermoplastic film material, in particular made of CPET material.

## Revendications

1. Procédé pour la cristallisation d'un film (2 ; 102, 202 ; 302 ; 402 ; 502 ; 602) réalisé à partir d'un matériau de film thermoplastique, notamment à partir d'un matériau PET-C, pour aboutir à un produit (12 ; 112 ; 212 ; 312 ; 412 ; 512 ; 612), dans lequel un processus de cristallisation par transformation du matériau de film thermoplastique est exécuté à l'intérieur d'un outil de transformation (8 ; 108) prenant la forme d'un premier outil de mise en forme (208 ; 308 ; 408 ; 508 ; 608), une grande partie du processus de cristallisation étant réalisée le long d'un tronçon de cristallisation (15 ; 115 ; 215 ; 315 ; 415 ; 515 ; 615) à l'extérieur de cet outil de transformation (8 ; 108), la cristallisation principale s'effectuant pendant un mouvement cadencé du matériau de film thermoplastique dans la direction de la machine, la direction de la machine désignant une direction de transport dans laquelle le film, les ébauches et/ou les produits sont transportés le long d'une ligne de production, le processus de cristallisation prenant fin dans un outil de mise en forme supplémentaire (118 ; 218 ; 318 ; 418 ; 518 ; 618) prenant la forme d'un outil de mise en forme secondaire (120 ; 220 ; 320 ; 420 ; 520 ; 620), l'outil de mise en forme secondaire (120 ; 220 ; 320 ; 420 ; 520 ; 620) étant différent du premier outil de mise en forme (208 ; 308 ; 408 ; 508 ; 608) prenant la forme d'un outil de mise en forme principal (119 ; 219 ; 319 ; 419 ; 519 ; 619), et servant à lancer avant le processus de cristallisation, **caractérisé en ce que** la grande partie du processus de cristallisation le long du tronçon de cristallisation (15 ; 115 ; 215 ; 315 ; 415 ; 515 ; 615) est réalisée à l'extérieur des deux outils de mise en forme (8 ; 108, 118 ; 208, 281 ; 308, 318 ; 408, 418 ; 508, 518 ; 608, 618) tandis que le matériau de film thermoplastique est transporté entre ces deux outils de mise en forme (8 ; 108, 118 ; 208, 281 ; 308, 318 ; 408, 418 ; 508, 518 ; 608, 618) .

2. Procédé selon la revendication 1, **caractérisé en ce que** le film (2 ; 102, 202 ; 302 ; 402 ; 502 ; 602) transformé au niveau d'une zone de mise en forme d'entrée (9) est transféré, après la cristallisation le long du tronçon de cristallisation (15 ; 115 ; 215 ; 315 ; 415 ; 515 ; 615), à l'outil de mise en forme supplémentaire (118 ; 218 ; 318 ; 418 ; 518 ; 618), pour commander, à l'aide de l'outil de mise en forme supplémentaire (118 ; 218 ; 318 ; 418 ; 518 ; 618), le degré de cristallisation du matériau de film et/ou pour reproduire le film (2 ; 102, 202 ; 302 ; 402 ; 502 ; 602) transformé à l'aide de l'outil de mise en forme supplémentaire (118 ; 218 ; 318 ; 418 ; 518 ; 618).

3. Procédé selon la revendication 1 ou 2, **caractérisé en ce que** le film (2 ; 102, 202 ; 302 ; 402 ; 502 ; 602) est uniquement chauffé dans le premier outil de mise en forme (208 ; 308 ; 408 ; 508 ; 608) en amont du tronçon de cristallisation (15 ; 115 ; 215 ; 315 ; 415 ; 515 ; 615) et/ou est refroidi dans l'outil de mise en forme supplémentaire (118 ; 218 ; 318 ; 418 ; 518 ; 618) en aval du tronçon de cristallisation (15 ; 115 ; 215 ; 315 ; 415 ; 515 ; 615).

4. Procédé selon l'une quelconque des revendications précédentes, **caractérisé en ce qu'**un processus de cristallisation du matériau de film thermoplastique est exclusivement démarré à l'aide du premier outil de mise en forme (208 ; 308 ; 408 ; 508 ; 608) disposé dans la direction de la machine (3 ; 103 ; 203 ; 303 ; 403 ; 503 ; 603) en amont du tronçon de cristallisation (15 ; 115 ; 215 ; 315 ; 415 ; 515 ; 615) et/ou est terminé à l'aide de l'outil de mise en forme supplémentaire (118 ; 218 ; 318 ; 418 ; 518 ; 618) disposé dans la direction de la machine (3 ; 103 ; 203 ; 303 ; 403 ; 503 ; 603) en aval du tronçon de cristallisation (15 ; 115 ; 215 ; 315 ; 415 ; 515 ; 615) .

5. Procédé selon l'une quelconque des revendications précédentes, **caractérisé en ce que** le matériau thermoplastique peut cristalliser indépendamment d'une cadence de travail d'un outil de mise en forme (118 ; 208, 281 ; 308, 318 ; 408, 418 ; 508, 518 ; 608, 618) parmi le premier outil de mise en forme ou l'outil de mise en forme secondaire, une durée de cristallisation exclusive ou supplémentaire était fournie au matériau thermoplastique à l'extérieur de l'outil de mise en forme (118 ; 208, 281 ; 308, 318 ; 408, 418 ; 508, 518 ; 608, 618) parmi le premier outil de mise en forme ou l'outil de mise en forme supplémentaire, pour cristalliser.

6. Dispositif (1, 101) pour la mise en forme et la cristallisation, notamment pour le thermoformage d'un film (2 ; 102, 202 ; 302 ; 402 ; 502 ; 602) réalisé à partir d'un matériau de film thermoplastique, notamment à partir d'un matériau PET-C, pour aboutir à un produit (12 ; 112 ; 212 ; 312 ; 412 ; 512 ; 612), avec un outil de transformation (8 ; 108) prenant la forme d'un premier outil de mise en forme (208 ; 308 ; 408 ; 508 ; 608) comprenant une surface de traitement totale (108A) subdivisée en une zone de mise en forme de sortie (10 ; 110) et une zone de mise en forme d'entrée (9 ; 109) et avec un tronçon de traitement (4 ; 104 ; 204 ; 304 ; 404 ; 504 ; 604) le long duquel le film (2 ; 102, 202 ; 302 ; 402 ; 502 ; 602) est déplacé dans la direction de la machine (3 ; 103 ; 203 ; 303 ; 403 ; 503 ; 603) à travers l'outil de transformation (8 ; 108), **caractérisé en ce qu'**en aval et à l'extérieur de l'outil de transformation (8, 108), un tronçon de cristallisation (15 ; 115 ; 215 ; 315 ; 415 ; 515 ; 615) est disposé entre la zone de mise en forme d'entrée (9, 109) et la zone de mise en forme de sortie (10, 110), ledit tronçon comportant dans la direction de la machine (3 ; 103 ; 203 ; 303 ; 403 ; 503 ; 603) au moins la taille de la zone de mise en forme d'entrée (9, 109), la direction de la machine désignant une direction de transport dans laquelle le film, les ébauches et/ou les produits sont transportés le long d'une ligne de production et le tronçon de cristallisation (15 ; 115 ; 215 ; 315 ; 415 ; 515 ; 615) pouvant au moins en partie être chauffé et/ou refroidi.

7. Dispositif (1, 101) selon la revendication 6, **caractérisé en ce que** la surface de traitement totale (108A) de l'outil de transformation (8 ; 108) est chauffée, tant une zone de mise en forme (9 ; 109) de l'outil de transformation (8 ; 108 qu'une zone de mise en forme de sortie (10 ; 110) de cet outil de transformation (8 ; 108) pouvant être chauffées.

8. Dispositif (1, 101) selon la revendication 6, **caractérisé en ce que** le premier outil de mise en forme (208 ; 308 ; 408 ; 508 ; 608) peut être chauffé en amont du tronçon de cristallisation (15 ; 115 ; 215 ; 315 ; 415 ; 515 ; 615) et que l'outil de mise en forme supplémentaire (118 ; 218 ; 318 ; 418 ; 518 ; 618) peut être refroidi en aval du tronçon de cristallisation (15 ; 115 ; 215 ; 315 ; 415 ; 515 ; 615).

9. Dispositif (1, 101) selon l'une quelconque des revendications 6 à 8, **caractérisé en ce que** le tronçon de cristallisation (15 ; 115 ; 215 ; 315 ; 415 ; 515 ; 615) est disposé au niveau d'un dispositif tournant, notamment d'une table pivotante (655).

10. Installation (225 ; 325, 425) pour la fabrication de produits (12 ; 112 ; 212 ; 312 ; 412 ; 512 ; 612) réalisé à partir d'un matériau de film thermoplastique, notamment à partir d'un matériau PET-C, comprenant un dispositif (1, 101) pour la mise en forme et la cristallisation selon l'une quelconque des revendications 6 à 9, l'outil de transformation (8 ; 108) prenant la forme d'un premier outil de mise en forme (208 ; 308 ; 408 ; 508 ; 608) étant disposé dans une station de mise en forme (226 ; 326 ; 426 ; 526 ; 626) pour la mise en forme du matériau de film thermoplastique donnant les produits (12 ; 112 ; 212 ; 312 ; 412 ; 512 ; 612) de l'installation (225 ; 325, 425), **caractérisé en ce que** l'installation prend la forme d'une installation de fermeture et remplissage de forme (525) servant à la fabrication, au remplissage puis à la fermeture de produits (12 ; 112 ; 212 ; 312 ; 412 ; 512 ; 612) en matériau de film thermoplastique, notamment en matériau PET-C.
